# EUROPEAN PATENT SPECIFICATION

(11) **EP 2 884 138 B1**
(45) Date of publication and mention of the grant of the patent: **25.04.2018**
(21) Application number: 14193895.1
(22) Date of filing: 19.11.2014
(51) Int. Cl.: F16J 15/08, F02F 7/00

(54) **Method for sealing two components in engine**
Verfahren zur Abdichtung zweier Komponenten in einem Motor
Procédé de scellage de deux pièces dans un moteur

(30) Priority: 11.12.2013 GB 201321919
(43) Date of publication of application: 17.06.2015
(73) Proprietor: Caterpillar Energy Solutions GmbH, 68167 Mannheim (DE)
(72) Inventor: Guisasola, Íñigo, 76829 Landau (DE)
(74) Representative: BRP Renaud & Partner mbB Rechtsanwälte Patentanwälte Steuerberater

(56) References cited:
- US-A- 4 244 330
- US-A1- 2004 239 042
- US-A1- 2007 090 608

## Description

### Technical Field

The present disclosure relates to a method for providing sealing between two components in an internal combustion engine, and more particularly to tightening a cylinder head gasket between a cylinder head and an engine housing in the internal combustion engine.

### Background

A variety of techniques are used in connection with sealing internal combustion engine cylinders. A cylinder head gasket assembled and tightened between a cylinder head and an engine housing by means of a plurality of bolts has been used to provide a seal. The seal can ensure a maximum compression and avoid leakage of combustion gases, coolant and/or engine oil in the engine cylinders. While tightening of the bolts, a torque applied on the bolts generates a sealing pressure on the cylinder head gasket to seal an area around the engine cylinders. Particularly, in case of an engine operating at relatively high compression ratios, combustion pressure and temperature conditions, the cylinder head gasket may be subjected to relatively high loads and requires a homogenized sealing pressure along a circumference of the cylinder head gasket to maintain the leak-proof seal.

US 6,705,619 relates to a cylinder head gasket that is formed of a metal plate, a sealing bead formed in the metal plate around a liquid hole, and a peripheral bead formed in the metal plate to extend around a periphery of the metal plate. At least a part of the peripheral bead is set to have a surface pressure lower than that of the sealing bead when the gasket is tightened such that the height of the peripheral bead is lower than that of the sealing bead or the width of the peripheral bead is greater than that of the sealing bead. Thus, when the gasket is tightened, substantially uniform and optimum load share can be obtained on the peripheral bead and the sealing bead for the fluid hole.

US 2007/0090608 A1 discloses a gasket which can secure sufficient sealing capability even for compact, light and less rigid high-performance engines by including a sub-plate inbetween two base plates, wherein a bulge of the sub-plate is plastically deformable.

US 2004/0239042 A1 discloses a cylinder head gasket which includes a section that is plasticaly deformable in height under a maximum load occurring.

### Summary of the Disclosure

In an aspect of the present disclosure, a method for sealing a first component and a second component in an internal combustion engine during manufacturing and assembling of a new engine and/or servicing of an old engine includes placing a gasket between the first component and the second component. A first tightening force is applied between the first and the second component to plastically deform only a portion of the gasket. The first tightening force is partly relieved to a second tightening force.

In another aspect of the present disclosure, a method of assembling a cylinder head gasket between a cylinder head and an engine housing in an internal combustion engine is provided. The cylinder head gasket is placed between the cylinder head and the engine housing. A first tightening force is applied between the cylinder head and the engine housing to plastically deform the cylinder head gasket and create a plastically deformed portion. Further, the first tightening force is relieved to a second tightening force at the plastically deformed portion of the cylinder head gasket.

Other features and aspects of this disclosure will be apparent from the following description and the accompanying drawings.

### Brief Description of the Drawings

FIG. 1 illustrates a sectional exploded view of an internal combustion engine;
FIG. 2 illustrates a top view of a gasket;
FIG. 3 illustrates an enlarged view of the ready to be assembled engine of FIG. 1;
FIG. 4 illustrates the engine of FIG. 3, after applying a first tightening force;
FIG. 5 illustrates the engine of FIG. 4, after relieving the first tightening force; and
FIG. 6 illustrates the engine of FIG. 5, after applying a second tightening force.

### Detailed Description

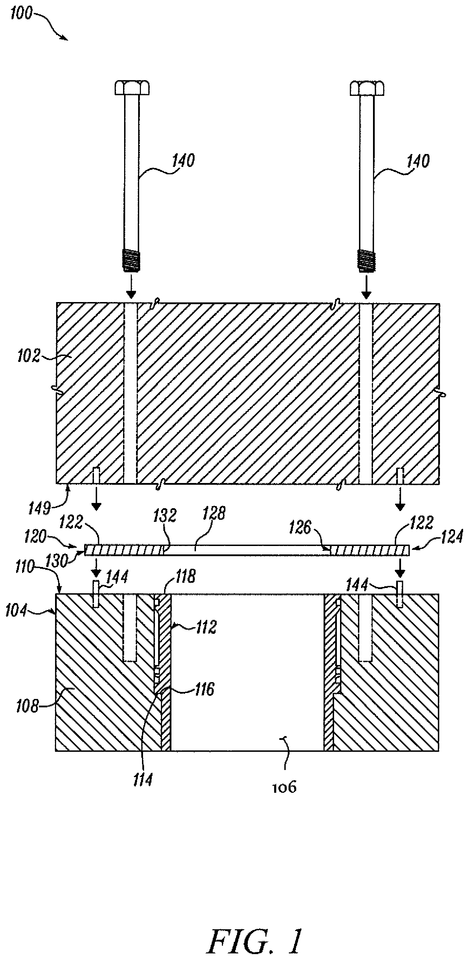

FIG. 1 is a sectional view of an internal combustion engine 100, hereinafter referred to as "the engine 100". The engine 100 may be any type of engine (gas, diesel, gaseous fuel, natural gas, or propane based engine etc.), may be of any size, with any number of cylinders, and in any configuration ("V," in-line, radial, etc.). The engine 100 may be used to power any machine or other device, including on-highway trucks or vehicles, off-highway trucks or machines, earth moving equipment, pumps, stationary equipment, generators, and the like. The engine 100 may also be used to power machines or devices used in aerospace applications, locomotive applications, marine applications, and other engine powered applications.

In an aspect of the present disclosure, the engine 100 may be a compression ignition internal combustion engine, such as a gas engine, particular an engine using natural gas and/or biogas as a fuel. For clarity, the following description refers to a single cylinder engine, but the principle of the present disclosure can be applied to a multi-cylinder engine. The engine 100 may include a cylinder head 102 and an engine housing 104. The cylinder head 102 may include a unitary head design or a composite cylinder head wherein a plurality of different cylinder head units are coupled with the engine housing 104. The engine housing 104 may define a plurality of cylinders, one of which is shown and labeled via reference numeral 106. Certain features and well known components of the engine 100 such as pistons, a crankshaft, camshafts, fuel injectors, etc., are omitted from FIG. 1 depiction.

The engine housing 104 may further include an engine block 108 having a top face 110, and a cylinder liner 112 disposed in the engine block 108. The cylinder liner 112 may be associated with each of the plurality of cylinders 106 of the engine 100. In the illustrated embodiment, the cylinder liner 112 includes a shoulder portion 114 abutting a ledge 116 within the engine block 108. Further, a sealing surface 118 of the cylinder liner 112 may be substantially coplanar with the top face 110 of the engine block 108. In an embodiment, a distance from the top face 110 to the sealing surface 118 is in a range of about 0.1 millimeters and about 0.5 millimeters.

The engine 100 further includes a cylinder head gasket 120, hereinafter referred to as "the gasket 120", positioned between the cylinder head 102 and the engine housing 104. The gasket 120 may include a one-piece laminate body 122 including an outer perimeter 124, and an inner perimeter 126 defining a cylinder opening 128. The body 122 may further include an outer perimetrical region 130 adjoining the outer perimeter 124, and an inner perimetrical region 132 adjoining the inner perimeter 126.

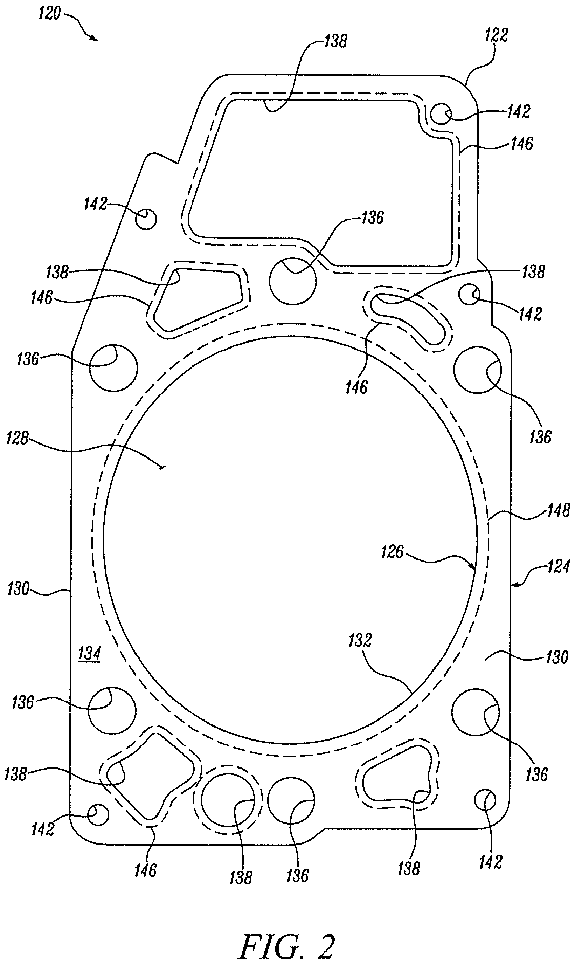

FIG. 2 illustrates a top view of the gasket 120, according to an exemplary embodiment of the present disclosure. In reference to FIGS. 1 and 2, the body 122 of the gasket 120 has a top or cylinder head-side surface 134. The body 122 may define a plurality of bolting apertures 136 and a plurality of fluid transfer apertures 138 formed in the outer perimetrical region 130. The fluid transfer apertures 138 may be configured for conveying air or fluids such as engine oil or coolant between the cylinder head 102 and the engine housing 104. The fluid transfer apertures 138 may also be configured for accommodating push rods (not shown) through one of the largest apertures 138, positioned closest to the top of the page in FIG. 2. The bolting apertures 136 may be configured to receive a plurality of bolts 140 for attaching the cylinder head 102 to the engine housing 104. In the illustrated embodiment, a total of six bolts 140 passed through six bolting apertures 136 arranged in a substantially circular pattern arrange on the outer perimetrical region 130. However, based on the application and design requirements any number of bolts may be used to attach the cylinder head 102 with the engine housing 104. In an alternative embodiment, additional bolting apertures 136 may be provided in the inner perimetrical region 132. Further, a plurality of locating apertures 142 may be formed in the body 122 and configured to receive locating pins 144 (see FIG. 1) for positioning the gasket 120 in a desired location and orientation upon the engine block 108 during assembling the engine 100.

The outer perimetrical region 130 may also include a plurality of low pressure seals 146 disposed around the fluid transfer apertures 138, shown in phantom lines in FIG. 2, and configured to fluidly seal the fluid transfer apertures 138. The body 122 may further include a high pressure combustion seal 148 disposed around the cylinder opening 128, and located in the inner perimetrical region 132. When assembled in the engine 100, the high pressure combustion seal 148 may be positioned between the sealing surface 118 of the cylinder liner 112 and an exposed lower surface 149 (see FIG. 1) of the cylinder head 102, whereas the low pressure seals 146 may be positioned between the top face 110 of the engine block 108 and the lower surface 149 of the cylinder head 102.

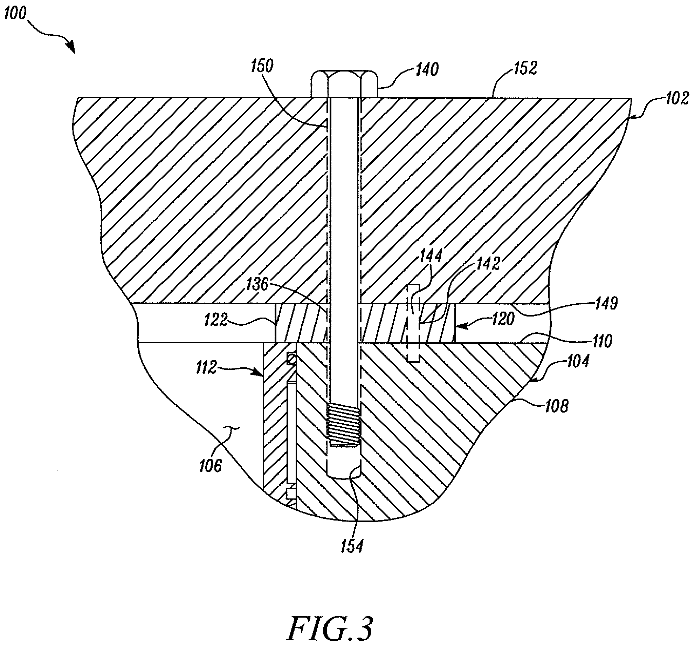

According to an aspect of the present disclosure, a method for providing sealing between two components in the engine 100 is described in the following description. The significance of providing the sealing during manufacturing and assembling of a new engine and/or servicing of an old engine will be apparent from the following description. In an exemplary embodiment, providing sealing between two components in the engine 100 may include a method of assembling the gasket 120 between the cylinder head 102, a first component, and the engine housing 104, a second component. In an embodiment, the method of assembling includes applying a first tightening force between the first and the second component 102, 104 to plastically deform the gasket 120 and partly relieving the first tightening force to a second tightening force as described in conjunction with FIGS. 3-6.

FIG. 3 illustrates an enlarged view of the ready to be assembled engine 100 wherein the gasket 120 is placed between the cylinder head 102 and the engine housing 104. As illustrated in FIG. 3, the locating pins 144 are received in the locating apertures 142 formed on the body 122 to position the gasket 120 in the desired location and orientation. One of the bolts 140 is received in a through bore 150 provided in the cylinder head 102 and extended through the bolting apertures 136 provided in the gasket 120. The through bore 150 extends between an upper surface 152 and the lower surface 149 of the cylinder head 102. Moreover, a threaded opening 154 may be provided on the engine block 108 and receive a threaded end 156 of the bolt 140 in an untightened condition. Alternatively, the bolt may be received in the threaded opening 154 provided on the cylinder liner 112 in case the cylinder head 102 is fixed to the cylinder liner 112 instead of the engine block 108.

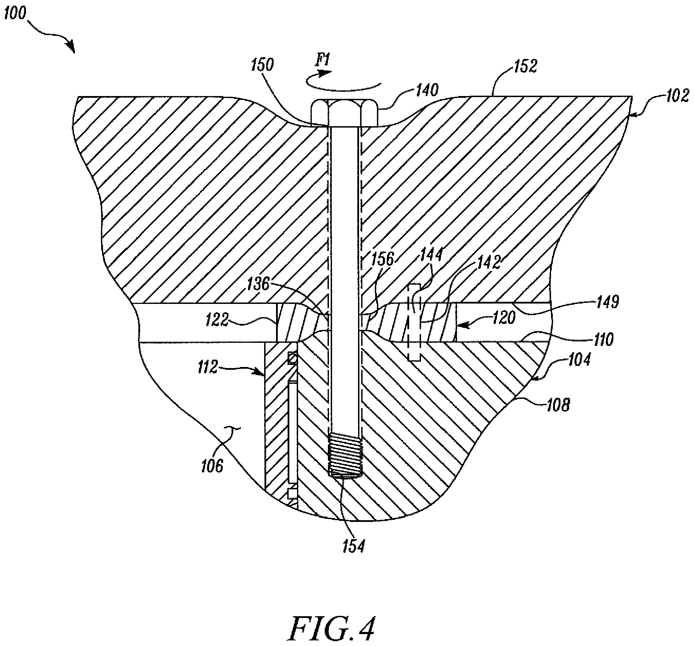

FIG. 4 illustrates the engine 100 of FIG. 3, after applying a first tightening force/torque F1 (shown by arrow heads) on the bolt 140 to at least plastically deform a portion of the gasket 120 in the proximity to the bolt 140. The first tightening force F1 may be applied using a manual gripping/tightening tool such as a plier, a crescent wrench, a ratchet socket wrench, or the like. Alternatively, a hydraulic or pneumatic tooling may be used to apply the first tightening force F1. Under the action of the first tightening force F1 the body 122 of the gasket 120 in the proximity to the bolt 140 may become thin and create a plastically deformed portion 156 by the cylinder head 102 and the engine block 108. As illustrated in FIG. 4, the first tightening force F1 may also elastically deform the cylinder head 102 and the engine block 108 or the cylinder liner 112 in proximity to the bolt 140 under compressive forces exerted by the bolt 140.

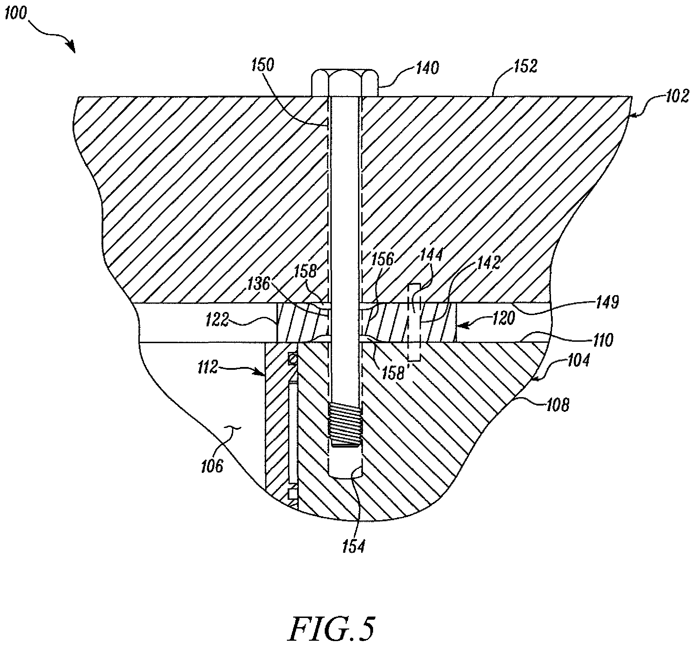

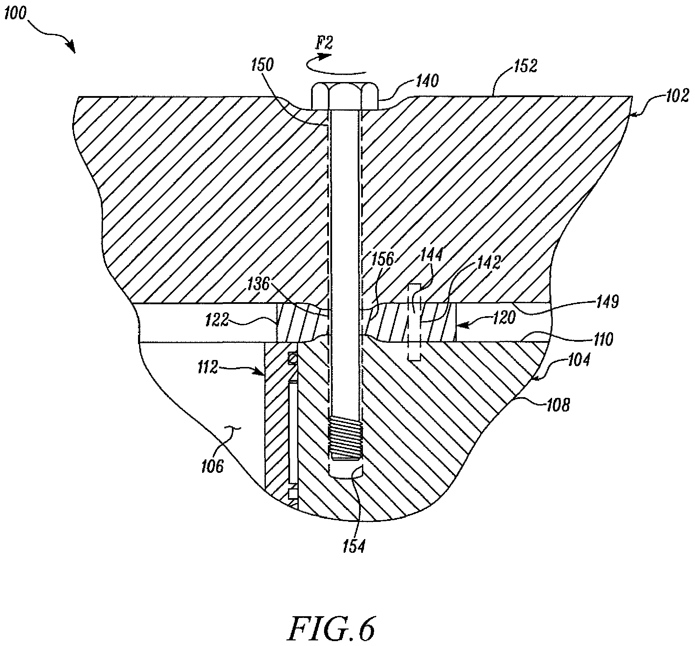

According to an embodiment of the present disclosure, as illustrated in FIG. 5, the first tightening force F1 is at least partly relieved or reduced and thereby creating a gap 158 between the plastically deformed portion 156 of the gasket 120 and the lower surface 149 of the cylinder head 102. Further, another gap 158' may also be created between the plastically deformed portion 156 and the top face 110 or the sealing surface 118 of the engine block 108 or the cylinder liner 112, respectively. As illustrated in FIG. 6, a second tightening force/torque F2 is applied on the bolt 140 to close the gaps 158, 158' by elastic deformation of the cylinder head 102 and the engine block 108 or the cylinder liner 112 in proximity to the bolt 140. In an embodiment, the second tightening force F2 is relatively lower than the first tightening force F1. According to an aspect of the present disclosure, the above described two-stage bolt tightening is performed on all the bolts 140 during the assembly process.

According to another embodiment of the present disclosure, the first tightening force F1 is reduced to the second tightening force F2 directly without creating the gaps 158, 158' and closing them afterwards. In an exemplary embodiment, the first tightening force F1 is greater than about 1.1 to 1.25 times the second tightening force F2. For example, the first tightening force F1 is greater than 1.25 times the second tightening force F2.

### Industrial Applicability

The industrial applicability of tightening the bolts 140 in two-stages for sealing two components in the engine 100 will be readily understood from the foregoing discussion. As the advancement in the field of engine technology is focused to achieve high compression ratios and combustion pressures, there is a requirement to provide a leak-proof seal. Over the years, engine developers have used a variety of options such as use of piston rings and cylinder liners to keep the cylinders sealed in engines generating high compression ratios, combustion pressure and temperature conditions. Moreover, there have been significant developments in gasket technology such as, for example, use of multi-layered steel head gaskets having soft graphite or non-asbestos surface layers with steel core. However, a non-uniform sealing pressure caused by the bolts 140 along the outer perimetrical region 130 and/or the inner perimetrical region 132 may lead to loss in the compression pressure and negatively affect the combustion process. The non-uniform sealing pressure along the outer perimetrical region 130 and the inner perimetrical region 132 may also speed up the deformation of the gasket and/or the cylinder liner and overall reduce the life of the cylinder liners and piston rings.

According to an aspect of the present disclosure, the gasket 120 having the plastically deformed portion 156 disposed along the outer perimetrical region 130 and the inner perimetrical region 132 aids in uniform pressure distribution around the outer perimetrical region 130. The plastically deformed portion 156 of the gasket 120 prevents any further deformation of the gasket 120 beyond the plastically deformed portion 156 and thus provides a uniform sealing pressure. Further, the plastically deformed portion 156 of the gasket 120 help to remove any surface defects at the interface and prevent any fluids passing through the interface. Moreover, without departing from the scope of the present disclosure, the method for sealing, according to an aspect of the present disclosure, can be applicable to any flange joint in the internal combustion engine having a bolted connection.

While aspects of the present disclosure have been particularly shown and described with reference to the embodiments above, it will be understood by those skilled in the art that various additional embodiments may be contemplated by the modification of the disclosed machines, systems and methods without departing from the scope of the invention as defined by the appended claims. Such embodiments should be understood to fall within the scope of the present disclosure as determined based upon the claims.

## Claims

1. A method for sealing a first component (102) and a second component (104, 108, 112) in an internal combustion engine (100) during manufacturing and assembling of a new engine and/or servicing of an old engine, the method comprising:
placing a gasket (120) between the first component (102) and the second component (104, 108, 112),
applying a first tightening force (F1) between the first (102) and the second component (104, 108, 112) and plastically deforming only a portion of the gasket (120); and
at least partly relieving the first tightening force (F1) to a second tightening force (F2).

2. The method of claim 1, wherein the first and the second tightening forces (F1, F2) are transmitted between the first component (102) and the second component (104, 108, 112) by a bolt (140).

3. The method of claim 2, wherein the second component (104, 108, 112) has a threaded opening (154) to receive the bolt (140).

4. The method of any one of claims 1 to 3, wherein applying the first tightening force (F1) comprises plastically deforming the gasket (120) in proximity of the bolt (140).

5. The method of any one of claims 1 to 4, wherein applying the second tightening force (F2) deforms elastically at least parts of the gasket (120).

6. The method of any one of claims 1 to 5, wherein the first component (102) is a cylinder head of the internal combustion engine (100).

7. The method of any one of claims 1 to 6, wherein the second component (104, 108, 112) is at least one of an engine block (108) and a cylinder liner (112) of the internal combustion engine (100).

8. The method of any one of claims 1 to 7, wherein applying the first tightening force (F1) comprises elastically deforming the first component (102) and/or the second component (104, 108, 112).

9. The method of any one of claims 1 to 8, wherein applying the second tightening force (F2) comprises elastically deforming at least one of the first (102) and second components (104, 108, 112).

10. A method of assembling a cylinder head gasket (120) between a cylinder head (102) and an engine housing (104) in an internal combustion engine (100), the method comprising:
placing the cylinder head gasket (120) between the cylinder head (102) and the engine housing (104);
applying a first tightening force (F1) between the cylinder head (102) and the engine housing (104) to plastically deform the cylinder head gasket (120) and creating a plastically deformed portion (156); and
relieving the first tightening force (F1) to a second tightening force (F2) at the plastically deformed portion (156) of the cylinder head gasket (120).

11. The method of claim 10, wherein the first and the second tightening forces (F1, F2) are transmitted between the cylinder head (102) and the engine housing (104) by a bolt (140).

12. The method of claims 10 or 11, wherein the engine housing (104) comprises at least one of an engine block (108) and a cylinder liner (112) having a threaded opening (154) to receive the bolt (140).

13. The method of any one of claims 10 to 12, wherein applying the first tightening force (F1) further comprises elastically deforming the cylinder head (102) and/or the engine housing (104).

14. The method of any one of claims 10 to 13, wherein applying the second tightening force (F2) further comprises elastically deforming the cylinder head (102).

15. The method of any one of claims 10 to 14, wherein applying the second tightening force (F2) further comprises elastically deforming the engine housing (104).

## Patentansprüche

1. Verfahren zu dem Abdichten eines ersten Bauteils (102) und eines zweiten Bauteils (104, 108, 112) in einem Verbrennungsmotor (100) während der Herstellung und des Zusammenbaus eines neuen Motors und/oder der Wartung eines alten Motors, wobei das Verfahren Folgendes umfasst:
Platzieren einer Dichtung (120) zwischen dem ersten Bauteil (102) und dem zweiten Bauteil (104, 108, 112),
Anwenden einer ersten Anziehkraft (F1) zwischen dem ersten (102) und dem zweiten Bauteil (104, 108, 112) und plastisches Verformen nur eines Abschnitts der Dichtung (120); und
zumindest teilweises Lockern der ersten Anziehkraft (F1) zu einer zweiten Anziehkraft (F2).

2. Verfahren nach Anspruch 1, wobei die erste und die zweite Anziehkraft (F1, F2) zwischen dem ersten Bauteil (102) und dem zweiten Bauteil (104, 108, 112) durch einen Bolzen (140) übertragen werden.

3. Verfahren nach Anspruch 2, wobei das zweite Bauteil (104, 108, 112) eine Gewindeöffnung (154) aufweist, um den Bolzen (140) aufzunehmen.

4. Verfahren nach einem der Ansprüche 1 bis 3, wobei das Anwenden der ersten Anziehkraft (F1) ein plastisches Verformen der Dichtung (120) in der Nähe des Bolzens (140) umfasst.

5. Verfahren nach einem der Ansprüche 1 bis 4, wobei das Anwenden der zweiten Anziehkraft (F2) zumindest Teile der Dichtung (120) elastisch verformt.

6. Verfahren nach einem der Ansprüche 1 bis 5, wobei das erste Bauteil (102) ein Zylinderkopf des Verbrennungsmotors (100) ist.

7. Verfahren nach einem der Ansprüche 1 bis 6, wobei das zweite Bauteil (104, 108, 112) zumindest eines von einem Motorblock (108) und einer Zylinderlaufbuchse (112) des Verbrennungsmotors (100) ist.

8. Verfahren nach einem der Ansprüche 1 bis 7, wobei das Anwenden der ersten Anziehkraft (F1) ein elastisches Verformen des ersten Bauteils (102) und/oder des zweiten Bauteils (104, 108, 112) umfasst.

9. Verfahren nach einem der Ansprüche 1 bis 8, wobei das Anwenden der zweiten Anziehkraft (F2) ein elastisches Verformen zumindest eine von erstem (102) und zweitem Bauteil (104, 108, 112) umfasst.

10. Verfahren zu dem Zusammenbauen einer Zylinderkopfdichtung (120) zwischen einem Zylinderkopf (102) und einem Motorgehäuse (104) in einem Verbrennungsmotor (100), wobei das Verfahren Folgendes umfasst:
Platzieren der Zylinderkopfdichtung (120) zwischen dem Zylinderkopf (102) und dem Motorgehäuse (104);
Anwenden einer ersten Anziehkraft (F1) zwischen dem Zylinderkopf (102) und dem Motorgehäuse (104), um die Zylinderkopfdichtung (120) plastisch zu verformen und einen plastisch verformten Abschnitt (156) zu erzeugen; und
Lockern der ersten Anziehkraft (F1) zu einer zweiten Anziehkraft (F2) an dem plastisch verformten Abschnitt (156) der Zylinderkopfdichtung (120).

11. Verfahren nach Anspruch 10, wobei die erste und die zweite Anziehkraft (F1, F2) zwischen dem Zylinderkopf (102) und dem Motorgehäuse (104) durch einen Bolzen (140) übertragen werden.

12. Verfahren nach Anspruch 10 oder 11, wobei das Motorgehäuse (104) zumindest eines von einem Motorblock (108) und einer Zylinderlaufbuchse (112) umfasst, die eine Gewindeöffnung (154) aufweist, um den Bolzen (140) aufzunehmen.

13. Verfahren nach einem der Ansprüche 10 bis 12, wobei das Anwenden der ersten Anziehkraft (F1) weiter ein elastisches Verformen des Zylinderkopfs (102) und/oder des Motorgehäuses (104) umfasst.

14. Verfahren nach einem der Ansprüche 10 bis 13, wobei das Anwenden der zweiten Anziehkraft (F2) weiter ein elastisches Verformen des Zylinderkopfs (102) umfasst.

15. Verfahren nach einem der Ansprüche 10 bis 14, wobei das Anwenden der zweiten Anziehkraft (F2) weiter ein elastisches Verformen des Motorgehäuses (104) umfasst.

## Revendications

1. Procédé de scellage d'une première pièce (102) et d'une seconde pièce (104, 108, 112) dans un moteur à combustion interne (100) au cours de la fabrication et de l'assemblage d'un moteur neuf et/ou de l'entretien courant d'un vieux moteur, le procédé comprenant :
la mise en place d'un joint d'étanchéité (120) entre la première pièce (102) et la seconde pièce (104, 108, 112),
l'application d'une première force de serrage (F1) entre la première (102) et la deuxième pièce (104, 108, 122) et la déformation plastique d'une portion seulement du joint d'étanchéité (120) ; et
le relâchement au moins partiel de la première force de serrage (F1) jusqu'à une seconde force de serrage (F2).

2. Procédé selon la revendication 1, dans lequel les première et seconde forces de serrage (F1, F2) sont transmises entre la première pièce (102) et la seconde pièce (104, 108, 112) par un boulon (140).

3. Procédé selon la revendication 2, dans lequel la seconde pièce (104, 108, 112) a une ouverture filetée (154) pour recevoir le boulon (140).

4. Procédé selon l'une quelconque des revendications 1 à 3, dans lequel l'application de la première force de serrage (F1) comprend la déformation plastique du joint d'étanchéité (120) à proximité du boulon (140).

5. Procédé selon l'une quelconque des revendications 1 à 4, dans lequel l'application de la seconde force de serrage (F2) déforme élastiquement au moins de partie du joint d'étanchéité (120).

6. Procédé selon l'une quelconque des revendications 1 à 5, dans lequel la première pièce (102) est une tête de cylindre du moteur à combustion interne (100).

7. Procédé selon l'une quelconque des revendications 1 à 6, dans lequel la seconde pièce (104, 108, 112) est au moins l'un d'un bloc-moteur (108) et d'une chemise de cylindre (112) du moteur à combustion interne (100).

8. Procédé selon l'une quelconque des revendications 1 à 7, dans lequel l'application de la première force de serrage (F1) comprend la déformation élastique de la première pièce (102) et/ou de la seconde pièce (104, 108, 112).

9. Procédé selon l'une quelconque des revendications 1 à 8, dans lequel l'application de la seconde force de serrage (F2) comprend la déformation élastique d'au moins l'une des première (102) et seconde pièces (104, 108, 112).

10. Procédé d'assemblage d'un joint d'étanchéité de tête de cylindre (120) entre une tête de cylindre (102) et un compartiment moteur (104) dans un moteur à combustion interne (100), le procédé comprenant :
la mise en place du joint d'étanchéité de la tête de cylindre (120) entre la tête de cylindre (102) et le compartiment moteur (104) ;
l'application d'une première force de serrage (F1) entre la tête de cylindre (102) et le compartiment moteur (104) pour déformer plastiquement le joint d'étanchéité de la tête de cylindre (120) et créer une portion plastiquement déformée (156) ; et
le relâchement de la première force de serrage (F1) jusqu'à une seconde force de serrage (F2) au niveau de la portion plastiquement déformée (156) du joint d'étanchéité de la tête de cylindre (120).

11. Procédé selon la revendication 10, dans lequel les première et seconde forces de serrage (F1, F2) sont transmises entre la tête de cylindre (102) et le compartiment moteur (104) par un boulon (140).

12. Procédé selon les revendications 10 ou 11, dans lequel le compartiment moteur (104) comprend au moins l'un d'un bloc-moteur (108) et d'une chemise de cylindre (112) ayant une ouverture filetée (154) pour recevoir le boulon (140).

13. Procédé selon l'une quelconque des revendications 10 à 12, dans lequel l'application de la première force de serrage (F1) comprend en outre la déformation élastique de la tête de cylindre (102) et/ou du compartiment moteur (104).

14. Procédé selon l'une quelconque des revendications 10 à 13, dans lequel l'application de la seconde force de serrage (F2) comprend en outre la déformation élastique de la tête de cylindre (102).

15. Procédé selon l'une quelconque des revendications 10 à 14, dans lequel l'application de la seconde force de serrage (F2) comprend en outre la déformation élastique du compartiment moteur (104).
